(19) **Europäisches Patentamt / European Patent Office / Office européen des brevets**

(11) **EP 1 903 503 A2**

(12) **EUROPEAN PATENT APPLICATION**

(43) Date of publication:
26.03.2008 Bulletin 2008/13

(51) Int Cl.:
*G06T 7/00* (2006.01)  *A61B 5/00* (2006.01)

(21) Application number: 07116999.9

(22) Date of filing: 21.09.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 22.09.2006 US 534345

(71) Applicants:
• Dekel, Doron
  Toronto, ON M3H 4X1 (CA)

• Bitter, Ingmar
  Toronto, ON L6A 1X8 (CA)

(72) Inventors:
• Dekel, Doron
  Toronto, ON M3H 4X1 (CA)
• Bitter, Ingmar
  Toronto, ON L6A 1X8 (CA)

(74) Representative: Bongiovanni, Simone
  Studio Torta S.r.l
  Via Viotti, 9
  10121 Torino (IT)

(54) **Method, system and computer program product for providing user-customizable standardized anatomical viewing protocols for volumetric data**

(57) A method, system and computer program product for automatically generating a set of views for a new set of voxel data according to a viewing protocol are provided. This involves a) storing a reference set of views for a reference set of voxel data according to the viewing protocol, wherein each view in the reference set of views is defined by a set of geometrical parameters defined with respect to a reference coordinate system of the reference set of voxels; b) defining a registration mapping from the reference set of voxel data to the new set of voxel data; and, c) for each view in the reference set of views, using the registration mapping to map each view in the reference set of views to the new set of voxel data to provide the set of views for the new set of voxel data according to the viewing protocol.

FIG. 2

EP 1 903 503 A2

**Description**

The present invention relates generally to computer-generated images and, more particularly, to a method for storing and comparing views of three-dimensional images and sequences of three-dimensional images.

## BACKGROUND OF THE INVENTION

Physicians are faced with an increased need to more efficiently interpret large volumetric image datasets produced by medical imaging scanners utilizing technologies such as computed tomography (CT) or magnetic resonance imaging (MRI). These imaging scanners typically produce a series of cross-sectional images or slices in each patient session for viewing by the physician. Sequences of two-dimensional slices may be combined to produce information about a volume corresponding to an area of the patient's anatomy. Whereas, in the past, viewing the slice images of the image volume individually, side-by-side, was sufficient, the increased number of slices routinely acquired with modern imagers - often approaching 1,000 slices/exam - renders such methods impractical. As well, the increased number of possible diagnostic purposes for which such volumetric data is useful further compounds the problem. Physicians are therefore increasingly using 3D rendering methods, such as pixel averaging, maximum intensity projection (MIP), and color/opacity compositing for examining the volume contents.

In current 3D viewing systems, physicians are typically presented multiple views, often rendered in viewport windows and tabulated in a "collage" layout, with their geometry cross-referenced to assist the user in understanding their relationship to each other and to the patient's anatomy. The selection of appropriate parameter values for optimal 3D views is often very time-consuming.

## SUMMARY

In accordance with an aspect of an embodiment of the invention, there is provided a method of automatically generating a set of views for a new set of voxel data according to a viewing protocol. The method comprises a) storing a reference set of views for a reference set of voxel data according to the viewing protocol, wherein each view in the reference set of views is defined by a set of geometrical parameters defined with respect to a reference coordinate system of the reference set of voxels; b) defining a registration mapping from the reference set of voxel data to the new set of voxel data; and, c) for each view in the reference set of views, using the registration mapping to map each view in the reference set of views to the new set of voxel data to provide the set of views for the new set of voxel data according to the viewing protocol.

In accordance with another embodiment of the invention, there is provided a system for automatically generating a set of views for a new set of voxel data according to a viewing protocol. The system comprises a memory for storing the new set of voxel data and the viewing protocol; and means for performing the steps of a) storing a reference set of views for a reference set of voxel data according to the viewing protocol, wherein each view in the reference set of views is defined by a set of geometrical parameters defined with respect to a reference coordinate system of the reference set of voxels; b) defining a registration mapping from the reference set of voxel data to the new set of voxel data; and, c) for each view in the reference set of views, using the registration mapping to map each view in the reference set of views to the new set of voxel data to provide the set of views for the new set of voxel data according to the viewing protocol.

In accordance with a yet further embodiment of the invention, there is provided a computer program product for use on a computer. The computer program product comprises a recording medium; and, means recorded on the recording medium for instructing the computer system to perform the steps of: a) storing a reference set of views for a reference set of voxel data according to the viewing protocol, wherein each view in the reference set of views is defined by a set of geometrical parameters defined with respect to a reference coordinate system of the reference set of voxels; b) defining a registration mapping from the reference set of voxel data to the new set of voxel data; and, c) for each view in the reference set of views, using the registration mapping to map each view in the reference set of views to the new set of voxel data to provide the set of views for the new set of voxel data according to the viewing protocol.

## BRIEF DESCRIPTION OF THE DRAWINGS

The skilled person in the art will understand that the drawings, described below, are for illustration purposes only. The drawings are not intended to limit the scope of the applicant's teachings in any way.

FIG. 1 provides examples of slab geometries and their respective sampling grids.

FIG. 2 is a flowchart illustrating a method of creating and saving a 3D viewing protocol in accordance with an aspect of an embodiment of the invention.

FIG. 3 is a flowchart illustrating a method of applying a viewing protocol using volume-to-volume registration in accordance with a further aspect of an embodiment of the invention.

FIG. 4 is a block diagram illustrating a computer system in accordance with an embodiment of the invention.

FIG. 5 is a flowchart illustrating a method of applying an atlas-based viewing protocol using volume-to-volume registration in accordance with a further aspect of an embodiment of the invention.

## DETAILED DESCRIPTION OF THE INVENTION

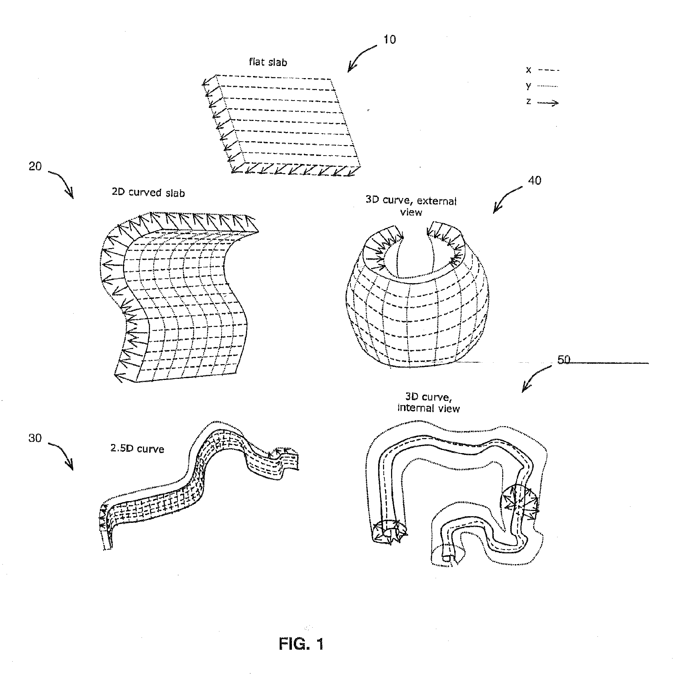

Examples of 3D rendering geometries are illustrated in FIG. 1. These include: i) a planar slab **10,** in which an extruded plane of a given thickness (typically 0-10mm) is generated; ii) a curved slab, in which an extruded curve of a given thickness is generated); and iii) simulated camera views, in which a virtual camera is placed at a given orientation and location (inside or outside the data volume) and an image is computed using orthonormal or perspective projection geometry. In the case of curved slab rendering, the extrusion may be of a fixed curve along a linear path **20** (2D), a fixed curve along a curved path **30** (2.5D), or a variable curve along a curved path **40, 50** (3D). With simulated camera views, the view may optionally contain cutting planes and masks to help uncover anatomical regions that would otherwise be hidden from view of the virtual camera.

Creating a saved viewing protocol

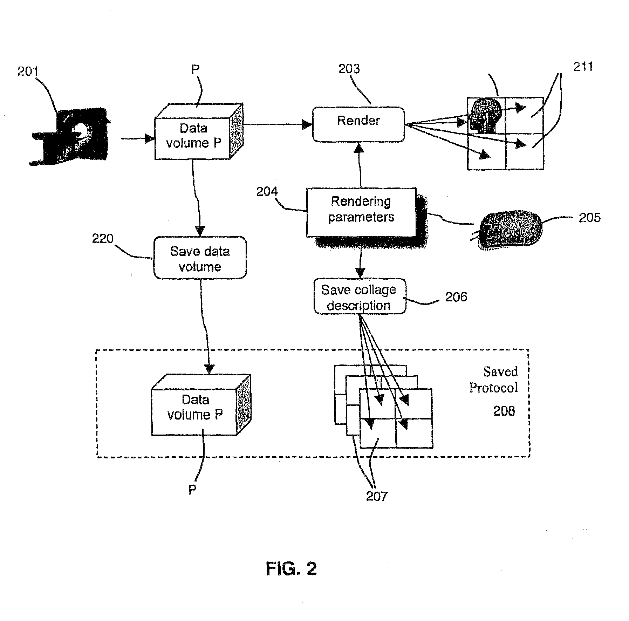

Referring now to FIG. 2, one embodiment of the process of creating a saved viewing protocol is illustrated in greater detail. A patient is scanned using a medical imaging scanner **201,** such as a CT or MRI system. The medical imaging scanner produces a sequence of two-dimensional image slices. The sequence of 2D image slices is combined to synthesize image data in a third-dimension, to produce three-dimensional volume data. Alternatively, the medical imaging scanner may provide complete 3D volume data **P.**

The volume data is represented as a set of volume cells, or voxels, representing data values at grid locations in three-dimensional space. Voxels in the data volume are geometrically associated with a reference coordinate system (RCS) P, chosen for convenience. For example, each voxel intensity value may have associated Cartesian coordinates $(x_P, y_P, z_P)$. Alternatively, a suitable substitute coordinate system may be used, such as, e.g., a cylindrical coordinate system.

To view the contents of the volume, the user is presented with a collage of one or more cross-referenced views **211.** A rendering algorithm 203, controlled by a set of rendering parameters **204** prescribing the rendering operation, generates each view. The parameters may include the rendering type (e.g., average, MIP, compositing), the geometry type (e.g., flat slab, curved slab, or simulated camera), the geometrical coordinates and angles associated with the given geometry type, and additional optional parameters. Optional parameters may include, for example, color, contrast, transparency, volumetric masks or thresholding ranges to highlight specific features in a volume.

Some of the parameters may be set to change automatically over a given range to create animation effects. For example, the rendering algorithm may animate the output image to produce a rotating effect or to progressively unmask or cut away anatomical elements.

The rendering techniques describe here, and their controlling parameters, are well known in the art and are embodied in commercial visualization workstations marketed by CT and MRI scanner manufacturers, such as Philips (www.medical.philips.com), GE (www.gehealthcare.com), Siemens (www.medical.siemens.com), as well by dedicated workstation developers such as Vital Images (www.vitalimages.com) and TeraRecon (www.terarecon.com).

Using an input device **205,** such as a mouse or keyboard, the user may modify some or all of the rendering parameters until the views in the collage best show the anatomy of interest. The user then saves in step **206** the collage description **207** to a persistent storage medium, such as a computer hard drive. The collage description **207** contains the layout of the views **211** within the collage viewing area **210,** and, for each view, the parameters **204** that specify the rendering operation for generating that view.

The user may further change the layout of the views **211** in collage viewing area **210,** adjust its contents by changing rendering parameters **204,** and again saving in step **206** the new collage description **207** to the persistent storage medium to create a saved protocol **208,** consisting of multiple collage descriptions **207.** This process may be repeated as many times as necessary.

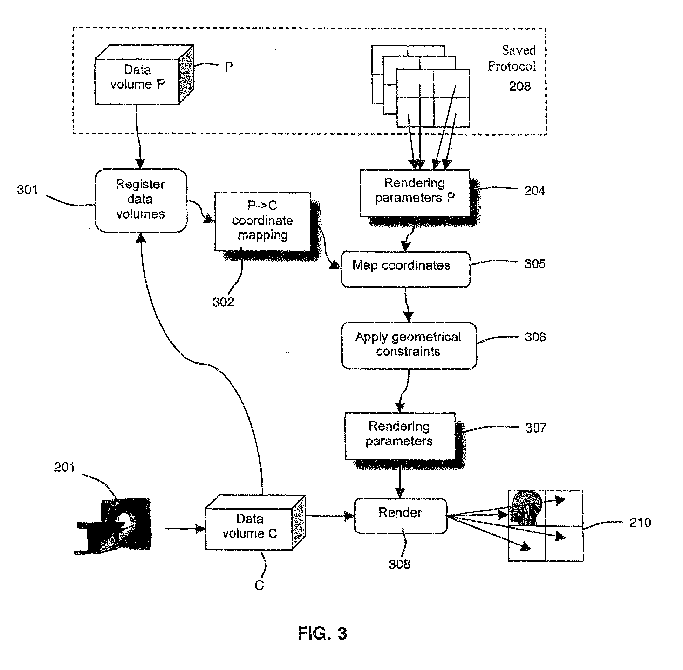

The result is a sequence of collages forming a streamlined review protocol **208** preferred by the user when reviewing the type of anatomy shown in the data volume **P.** The data volume **P** from which the collages were generated is saved in step **220,** forming a protocol consisting of a data volume **P** and a sequence of collage descriptions **207,** each containing views described by rendering parameters **204** relating to data volume **P.** The use of data volume **P** is described in greater detail below, with regard to FIG. 3. By retaining and using the collage descriptions **207** and data volume **P,** the system is able to quickly and reliably generate a sequence of pre-determined renderings in a familiar order and in relation to familiar objects to facilitate diagnosis by a clinician.

Moreover, saved protocols may be generated for various classes of patients to facilitate easier comparison. For example, a clinician may save a protocol for male patients, female patients, children or for specific medical conditions.

For example, when reviewing a CT angiography exam of the head and neck, the user may create a sequence of collages, each presenting a region of possible abnormalities: left carotids, right carotids, middle cerebral artery, Circle of Willis, etc. In each collage, the views of the region are optimized for a quick detection of blood flow abnormalities. For example, the left carotid collage may present a simulated camera view of the neck from the left side, a curved slab of 5mm thickness through the middle of the carotid, and a small 1 mm flat slab view programmed to scroll automatically along the length of the carotid, perpendicular to its centerline, at 1 mm increments.

Applying the viewing protocol using volume registration

The viewing protocol created for volume **P** may subsequently be used with other data volumes, such as a current data volume **C,** acquired from another patient or from the same patient at a different time. As described above, the particular profile used can be selected from among many different protocols. The selection of protocol P from amongst the set of available protocols can be done either manually by selection from a descriptive list, or automatically, by the computer executing programmed decision rules that select the most suitable protocol to apply based on the identity and/or profession of the user (eg, radiologist or surgeon) and/or organizational affiliation of the user (eg, department A or department B) and/or the contents of the data and its associated descriptors (eg, anatomical region, clinical indications for the study) and/or the nature of the patient (male or female, adult or child, physiological condition).

Referring now to FIG. 3, there is shown a flowchart illustrating the steps involved in a method according to an aspect of an embodiment of the invention. The method involves applying a saved viewing protocol **208** and rendering parameters **204** using volume-to-volume registration obtained in step **301.** The method involves automatic data-volume to data-volume registration, in which two or more data volumes are correlated. Many volume to volume registration algorithms are currently known in the art, as surveyed in the book "Handbook or Biomedical Image Analysis Volume III: Registration Methods", edited by Suri, Wilson, Laxminarayan, 2005, the contents of which are included here by reference. The multi-resolution algorithms described next is similar to the one described in the paper "A Generic Framework for Non-Rigid Registration Based on Non-Uniform Multi-Level Free-Form Deformations", Julia A. Scnablel et al, in Proc. of MICCAI 2001.

The registration of the two volumes generates a mapping **T**($x$) of any coordinate in RCS **P** to a corresponding anatomical location in RCS **C,** or a **P**→**C** coordinate mapping **302.** A possible implementation of the volume-volume registration uses a non-rigid mapping, which is a combination of global and local transformations:

$$\mathbf{T}(x) = \mathbf{T}_{global}(x) + \mathbf{T}_{local}(x)$$

The global transform is computed first, using an affine transformation algorithm, to compensate for pose differences between data volumes by maximization of normalized mutual information. Next, the local transform is computed to facilitate compensation for local deformations, using a spline-based approach. Deformation is modeled as free-form deformation using B-splines, which can be written as the 3D tensor product of 1D cubic B-splines:

$$\mathbf{T}_{local} = \sum_{t=0}^{3} \sum_{m=0}^{3} \sum_{n=0}^{3} B_l(u) B_m(v) B_n(w) \phi_{i+l, j+m, k+n}$$

Where $\phi$ denotes the control points which parameterize the transform.

The optimal transform is found by minimizing a cost function associated with both the global and local transform parameters. The cost function can comprise two components representing competing goals: maximizing voxel value correlation in the regions around each of the control points and maintaining smoothness and regularity in the transform. Control points may be defined in volume **P** in a suitable arrangement, for example, on a regular grid of a desired resolution (e.g., 1 cm spacing).

Using the P→C coordinate mapping **302,** the geometrical parameters of each view in **P** are mapped **305** to coordinate space **C.** Where a parameter describes an angle or a directional unit vector, it is converted into two sets of coordinates (i.e., the base and tip of a vector), which are then mapped from **P** to **C** to provide the equivalent vector in **C.**

Viewing assumptions may be explicitly or implicitly encoded in the rendering parameters **204.** In one example, flat slab viewing geometry is defined by a rectangular section of a plane representing one boundary of the slab, and a thickness over which sampled values would be processed to generate the output image. The rectangular section may be further defined by the **P** coordinates of its corners. In a second example, a curve may be specified by a sequence of equidistant positions along the curve, each position having a specific coordinate in volume **P.** The requirement that the positions be equidistant may be specified in the curve descriptor or implicitly assumed by the program reading the descriptor from file.

As organs have different sizes and shapes among different individuals, coordinate mapping will rarely preserve distances and angles. Thus, the mapped locations in volume **C** may violate geometrical constraints associated with the view type (e.g., equidistant curve points). Thus, a processing step **306** may be applied following the mapping to compute parameters that observe the geometrical constraints, yet remain as close as possible to the transformed views.

In one example, locations on the planar rectangular section in volume **P** do not form a planar rectangular section in volume **C.** A set of new corner coordinates may be produced by sampling the section in volume **C** in a rectangular grid, transforming each grid location to volume **P,** computing the closest plane in volume **P** using bilinear regression, then selecting a rectangular section of the plane whose corners are the closest to the corners of the transformed grid. The thickness of the slab, in mm, remains unchanged.

In a second scenario, the mapped curve locations in volume **C** are not equidistant. Therefore, the mapped curve in volume **C** may be re-interpolated using a spline algorithm and re-sampled at new equidistant positions.

Geometrical constraints may also apply to the spatial relationship between multiple views in the same collage, such as relative angles and distances. Such constraints are best handled in a combined manner that best reflects the intended use of the views. For example, in a commonly used arrangement, the collage contains 3 views of mutually-perpendicular flat slabs intersecting at a location of interest, for example at the center of a lesion. In such a case, it is preferable to represent in the collage the geometry of all 3 views together as consisting of an intersection point and two perpendicular orientation unit vectors specifying the orientation of one of the planes. Upon retrieval, the intersection point and the ends of the two orientation unit vector (with their bases placed at the intersection point) are mapped to the C coordinate system in step 305. After the mapping, the vectors may not be of unit length and may not be perpendicular to each other. The constraints can be reapplied to the two vectors using well known linear algebra techniques, for example by using 3 cross products to generate a new set of mutually-perpendicular vectors similar to the original ones, which are then normalized to a unit length.

Non-geometrical rendering parameters, such as color, contrast and transparency may be passed on to the rendering step unmodified, or, optionally, they may be recomputed based on the contents of data volume C. For example, a thresholding value for hiding voxels in a 3D projection may be required to allow visualization of bright objects. This value may be specified either as a fixed value, in which case it is simply passed on unmodified, or it may be specified as some function of the data value histogram (e.g., at the 80$^{th}$ percentile), in which case it is recomputed.

A collage of multiple views in the protocol is presented to the user by computing new rendering parameters **307** for each of the views, as described above, and rendering them **308** in the collage viewing area **210** according to the collage's layout description. The user can step through the collages stored in the protocol to obtain a complete presentation of the anatomy of the given body region.

**Atlas-based protocols**

In some advanced applications, the data volume of interest can be registered to an atlas volume, in which data regions have been labeled or tagged. The atlas can serve, for example, as a model for segmenting volume P into anatomically meaningful regions. In such a case, the atlas volume itself may serve as a reference volume, eliminating the need for saving dataset C itself as an additional reference for the viewing protocol.

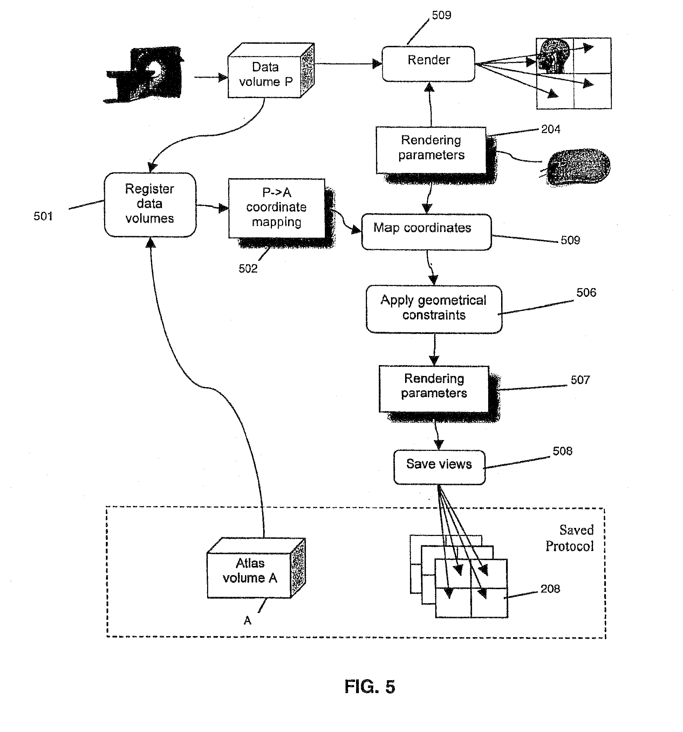

An alternative atlas-based method for saving a protocol is described in figure 5. For clarity, the same reference numerals, with 200 added, are used to designate steps of the atlas-based method of Figure 5 relative to analogous steps of the method of Figure 3. For brevity, the description of Figure 3 is not repeated in relation to Figure 5. Data volume P is registered to atlas volume A. The result of the registration, mapping P->A, is then used to map the relevant rendering parameters, established in step 509, to the atlas coordinate space. Constraints are then applied to preserve the viewing parameters' integrity, as described above, and the views are finally saved, in step 508, with reference to the atlas volume A, which is already in the database.

The process of later applying the viewing protocol to a new data volume C is identical to the one shown in figure 3, except that the atlas data volume A takes the place of protocol data volume P.

In another embodiment, similar in implementation to the atlas-based one, the reference data volume A, whether labeled or not, may be advantageously generated as a composite of individual datasets, obtained from multiple people. The compositing process averages the anatomical variations in a population to create a more typical arrangement of anatomy, enabling the registration of new datasets to the reference dataset to be more robust than in the case the reference dataset came from a single individual with some unusual anatomical features. Another advantage of compositing multiple datasets with partial spatial overlap is increased anatomical coverage, enabling the support region for registration to be potentially larger than in the case of a single dataset. This advantage applies not only when the composited datasets were obtained from different persons, but also when they were obtained from the same person at different times.

A variety of methods for compositing individual datasets into a single population-averaged dataset are known in the art. For example, see "A Population-Average, Landmark- and Surface-based (PALS) atlas of human cerebral cortex", Van Essen, Neuroimage. 2005 Nov 15;28(3):635-62, and "Groupwise Construction of Appearance Models using Piece-wise Affine Deformations", Cootes et al, Proc. of the British Machine Vision Conference, Sept 2005.

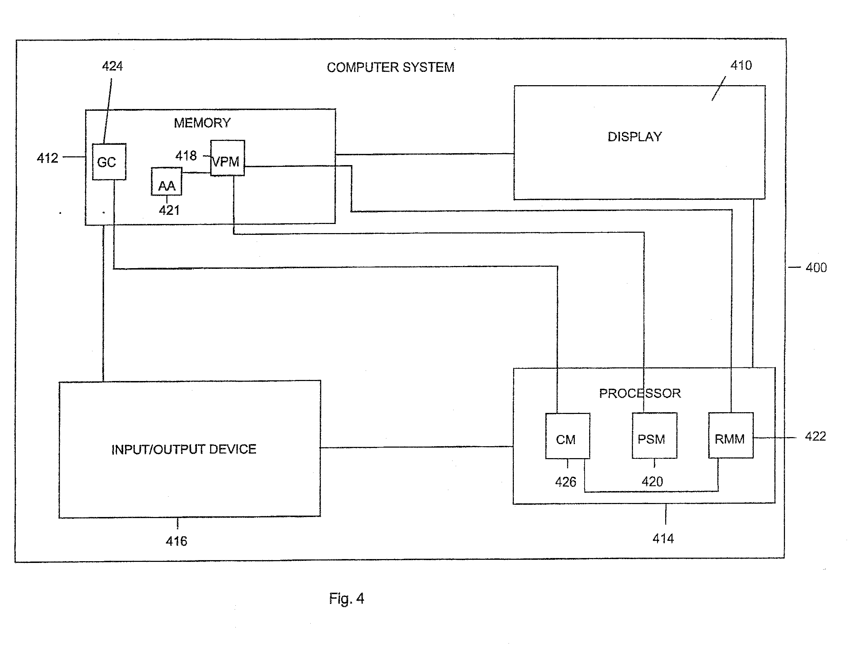

Referring to Figure 4, there is illustrated in a block diagram a computer system 400 for automatically generating sets of views in accordance with an embodiment of the invention. As shown, the computer system 400 can comprise a display 410, memory 412, processor 414 and input/output device 416. Optionally, all of these components may be provided on a single workstation. Alternatively, some of the elements may be located offsite. For example, in an alternative embodiment the display 410 and input/output device 416 can be provided in a workstation computer used by a user, such as a medical professional, while some components at least of the memory 412 and processor 414 are provided offsite. In such an embodiment, these components of the memory 412 and processor 414 could, for example, be remotely accessed by the user via the workstation and the internet.

In operation, memory 412 is operable to store a viewing protocol module (VPM) 418. This viewing protocol module (VPM) 418 can comprise a single reference set of views or a plurality of reference sets of views. Each reference set of views i) is for a corresponding reference set of voxel data; ii) can comprise at least two views, and iii) defines a particular protocol. Thus, where multiple reference sets of views are included in the viewing protocol module (VPM) 418, a user or the system can choose between multiple viewing protocols. A user, for example, could choose between viewing protocols using the input/output device 416 and a protocol selection module (PSM) 420. Alternatively, protocol selection module (PSM) 420 can be operable to automatically select a particular viewing protocol from among the plurality of viewing protocols based on factors, such as, for example, the identity of the user, the profession of the user, an organizational affiliation of the user, and a content of a new set of voxel data being considered.

The plurality of reference sets of voxel data, on which corresponding reference sets of views are defined to provide the plurality of viewing protocols, may comprise distinct reference sets of voxel data for each of the following groups:

1) an adult male reference set of voxel data;

2) an adult female reference set of voxel data;

3) a boy reference set of voxel data;

4) a girl reference set of voxel data;

5) a first condition reference set of voxel data for a first examination type (such as Cardiac Angiography); and,

6) a second condition reference set of voxel data for a second physiological condition (such as Colongraphy).

According to an aspect of an embodiment of the present invention, the reference set of views for a reference set of voxel data according to a particular viewing protocol are selected by a user, using the input/output device 416, when viewing different views on the display 410. The particular views selected are then stored in the reference set of views for that protocol. The views may be obtained from an anatomical atlas (AA) 421, also stored in memory 412, or from a person being scanned. Each view in each reference set of views can be defined by a set of geometrical parameters defined with respect to a reference coordinate system of the reference set of voxels, and by a set of non-geometrical parameters defined with respect to the reference set of voxels. The set of non-geometrical parameters can comprise attributes such as contrast, transparency and color.

Once the viewing protocol module (VPM) 418 has been developed, the system 400 is ready to pre-process a set of views for a new set of voxel data, based on a particular viewing protocol selected by the user via the protocol selection module (PSM) 420, or by the protocol selection module (PSM) 420 itself. Of course, where the viewing protocol module (VPM) 418 comprises but a single reference set of views for a reference set of voxel data to define only a single viewing protocol, no selection of a particular viewing protocol is required.

When the new set of voxel data is provided, then, as described above, a registration mapping module (RMM) 422 determines a registration mapping from the reference set of voxel data to the new set of voxel data. In one embodiment, this registration mapping is a volume-to-volume registration mapping. In establishing the registration mapping, the registration mapping module (RMM) 422 can map each view in the reference set of views to the new set of voxel data by, for each view in the reference set of views, 1) mapping a geometrical parameter in the set of geometrical parameters to a corresponding geometrical parameter to provide a new set of geometrical parameters defined with respect to a new reference coordinate system of the new set of voxel data; and 2) modifying each non-geometrical parameter defined with respect to the reference set of voxel data based on the new set of voxel data.

As described above, applying the registration mapping in this manner may distort the new set of views. To help to filter out some of these distortions, a correction module (CM) **426** is operable to generate a corrected set of views according to the viewing protocol, by applying a set of geometrical constraints (GC) **424** stored in memory **410.** Again, as described above, the set of geometrical constraints can comprise: 1) a shape constraint for preserving a view shape in the new set of views for the new set of voxel data; 2) an angular constraint for preserving a viewing angle in the new set of views for the new set of voxel data; 3) a spacing constraint for preserving internal relative spacing in the new set of views for the new set of voxel data; 4) an angular view-to-view constraint for preserving an angular relationship between different views in the new set of views for the new set of voxel data; and 5) a spacing view-to-view constraint for preserving spacing relationships between different views in the new set of views for the new set of voxel data. By this means, the view correction module (CM) **426** is operable to generate a corrected set of views according to the viewing protocol selected.

Other variations and modifications of the invention are possible. For example, it will be appreciated by those of skill in the art that aspects of embodiments of the present invention can also be embodied in instructions stored on a suitable recording medium, which instructions could subsequently be used to configure a computer system to implement an embodiment of the present invention. All such modifications or variations are believed to be within the sphere and scope of the invention as defined by the claims appended hereto.

**Claims**

1. A method of automatically generating a set of views for a new set of voxel data according to a viewing protocol, the method comprising:

   a) storing a reference set of views for a reference set of voxel data according to the viewing protocol, wherein each view in the reference set of views is defined by a set of geometrical parameters defined with respect to a reference coordinate system of the reference set of voxels;
   b) defining a registration mapping from the reference set of voxel data to the new set of voxel data; and,
   c) using the registration mapping to map each view in the reference set of views to the new set of voxel data to provide the set of views for the new set of voxel data according to the viewing protocol.

2. The method as defined in claim 1 wherein the reference set of views comprises at least two views.

3. The method as defined in claim 2 wherein step a) comprises reviewing different views of the reference set of voxel data to select and store the reference set of views.

4. The method as defined in claim 1 further comprising generating a set of views for a 2nd new set of voxel data according to the viewing protocol after generating the set of views in step c), by

   d) defining a registration mapping from the reference set of voxel data to the 2nd new set of voxel data;
   e) using the registration mapping to map each view in the reference set of views to the 2nd new set of voxel data to provide the set of views for the 2nd new set of voxel data according to the viewing protocol.

5. The method as defined in claim 1 wherein the viewing protocol further comprises a set of geometrical constraints including at least one of i) a shape constraint for preserving a view shape during step c), ii) an angular constraint for preserving a viewing angle during step c), iii) a spacing constraint for preserving internal relative spacing during step c), iv) an angular view-to-view constraint for preserving an angular relationship between different views in the set of views during step c), and v) a spacing view-to-view constraint for preserving a spacing relationship between different views in the set of views during step c); wherein step c) further comprises transforming the set of views to comply with the geometrical constraints to generate a corrected set of views according to the viewing protocol.

6. The method as defined in claim 1 wherein, in step c), the registration mapping is a volume-to-volume registration mapping.

7. The method as defined in claim 1 wherein the reference set of voxel data is obtained from at least one of (i) an anatomical atlas for storing the reference set of voxel data segmented into labeled regions; (ii) a person being scanned; (iii) a composite obtained from a person being scanned multiple times; and, (iv) a composite obtained from a plurality of people being scanned.

8. The method as defined in claim 1 wherein each view in the reference set of views is defined by a set of non-geometrical parameters defined with respect to the reference set of voxels, wherein the set of non-geometrical parameters comprises at least one attribute selected from the group consisting of contrast, transparency and color.

9. The method as defined in claim 8 wherein, in step c), using the registration mapping to map each view in the reference set of views to the new set of voxel data comprises, for each view in the reference set of views, defining a corresponding view in the new set of voxel data by, i) mapping a geometrical parameter in the set of geometrical parameters to a corresponding geometrical parameter of a new set of geometrical parameters defined with respect to a new reference coordinate system of the new set of voxel data, and ii) modifying each non-geometrical parameter defined with respect to the set of voxel data based on the new set of voxel data.

10. The method as defined in claim 1 further comprising, before step b), selecting the viewing protocol from a plurality of viewing protocols, wherein step a) comprises storing a plurality of reference sets of views for a plurality of reference sets of voxel data, wherein each reference set of views in the plurality of reference sets of views is of a corresponding reference set of voxel data in the plurality of reference sets of voxel data, and defines a corresponding viewing protocol in the plurality of viewing protocols.

11. The method as defined in claim 10 wherein the plurality of reference sets of voxel data includes at least one of a male reference set of voxel data, a female reference set of voxel data, an adult reference set of voxel data, a child reference set of voxel data, a first condition reference set of voxel data for a first physiological condition, and a second condition reference set of voxel data for a second physiological condition.

12. The method as defined in claim 1 further comprising automatically selecting the viewing protocol from the plurality of viewing protocols based on at least one of an identify of a user, a profession of the user, an organization affiliation of the user, and a content of the new set of voxel data.

13. A system for automatically generating a set of views for a new set of voxel data according to a viewing protocol, the system comprising:

a memory for storing the new set of voxel data and the viewing protocol;
means for performing the steps of

a) storing a reference set of views for a reference set of voxel data according to the viewing protocol, wherein each view in the reference set of views is defined by a set of geometrical parameters defined with respect to a reference coordinate system of the reference set of voxels;
b) defining a registration mapping from the reference set of voxel data to the new set of voxel data; and,
c) using the registration mapping to map each view in the reference set of views to the new set of voxel data to provide the set of views for the new set of voxel data according to the viewing protocol.

14. The system as defined in claim 13 wherein the reference set of views comprises at least two views.

15. The system as defined in claim 14 further comprising a display, wherein step a) comprises reviewing different views of the reference set of voxel data on the display to select and store the reference set of views.

16. The system as defined in claim 13 wherein the viewing protocol further comprises a set of geometrical constraints including at least one of i) a shape constraint for preserving a view shape during step c), ii) an angular constraint for preserving a viewing angle during step c), iii) a spacing constraint for preserving internal relative spacing during step c), iv) an angular view-to-view constraint for preserving an angular relationship between different views in the set of views during step c), and v) a spacing view-to-view constraint for preserving a spacing relationship between different views in the set of views during step c); wherein step c) further comprises transforming the set of views to comply with the geometrical constraints to generate a corrected set of views according to the viewing protocol.

17. The system as defined in claim 13 wherein, in step c), the registration mapping is a volume-to-volume registration mapping.

18. The system as defined in claim 13 wherein the reference set of voxel data is obtained from at least one of (i) an anatomical atlas for storing the reference set of voxel data segmented into labeled regions; (ii) a person being scanned; (iii) a composite obtained from a person being scanned multiple times; and, (iv) a composite obtained from a plurality of people being scanned.

**19.** The system as defined in claim 13 wherein each view in the reference set of views is defined by a set of non-geometrical parameters defined with respect to the reference set of voxels, wherein the set of non-geometrical parameters comprises at least one attribute selected from the group consisting of contrast, transparency and color.

**20.** The system as defined in claim 19 wherein, in step c), using the registration mapping to map each view in the reference set of views to the new set of voxel data comprises, for each view in the reference set of views, defining a corresponding view in the new set of voxel data by, i) mapping a geometrical parameter in the set of geometrical parameters to a corresponding geometrical parameter of a new set of geometrical parameters defined with respect to a new reference coordinate system of the new set of voxel data, and ii) modifying each non-geometrical parameter defined with respect to the set of voxel data based on the new set of voxel data.

**21.** The system as defined in claim 13 further comprising a user input device for selecting the viewing protocol from a plurality of viewing protocols, wherein step a) comprises storing a plurality of reference sets of views for a plurality of reference sets of voxel data, wherein each reference set of views in the plurality of reference sets of views is of a corresponding reference set of voxel data in the plurality of reference sets of voxel data, and defines a corresponding viewing protocol in the plurality of viewing protocols.

**22.** The system as defined in claim 21 wherein the plurality of reference sets of voxel data includes at least one of a male reference set of voxel data, a female reference set of voxel data, an adult reference set of voxel data, a child reference set of voxel data, a first condition reference set of voxel data for a first physiological condition, and a second condition reference set of voxel data for a second physiological condition.

**23.** The system as defined in claim 21 further comprising a microprocessor for automatically selecting the viewing protocol from the plurality of viewing protocols based on at least one of an identify of a user, a profession of the user, an organization affiliation of the user, and a content of the new set of voxel data.

**24.** A computer program product loadable in a memory of computer and comprising software code portions for implementing, when the computer program product is run on the computer, the method of any preceding claim 1 to 12.

FIG. 1

**FIG. 2**

**FIG. 3**

Fig. 4

EP 1 903 503 A2

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Handbook or Biomedical Image Analysis Volume III: Registration Methods. 2005
- **JULIA A. SCNABLEL et al.** A Generic Framework for Non-Rigid Registration Based on Non-Uniform Multi-Level Free-Form Deformations. *Proc. of MIC-CAI,* 2001
- **VAN ESSEN.** A Population-Average, Landmark- and Surface-based (PALS) atlas of human cerebral cortex. *Neuroimage,* 15 November 2005, vol. 28 (3), 635-62
- **COOTES et al.** Groupwise Construction of Appearance Models using Piece-wise Affine Deformations. *Proc. of the British Machine Vision Conference,* September 2005